# EUROPÄISCHE PATENTSCHRIFT

(11) **EP 1 990 228 B1**
(45) Veröffentlichungstag und Bekanntmachung des Hinweises auf die Patenterteilung: **01.12.2010**
(21) Anmeldenummer: 08450065.1
(22) Anmeldetag: 30.04.2008
(51) Int. Cl.: B60K 15/063, B60R 3/02

(54) **Kraftstofftank**
Fuel tank
Réservoir de carburant

(30) Priorität: 10.05.2007 AT 2922007 U
(43) Veröffentlichungstag der Anmeldung: 12.11.2008
(73) Patentinhaber: Alutech Gesellschaft m.b.H., 5651 Lend (AT)
(72) Erfinder: Fletcher Paul, 5620 Schwarzach (AT)
(74) Vertreter: Weiser, Andreas

(56) Entgegenhaltungen:
- DE-A1- 10 033 386
- DE-A1-102004 005 153
- DE-U1- 20 306 793
- US-A- 3 343 703

## Beschreibung

Die vorliegende Erfindung betrifft einen Kraftstofftank zur Außenmontage an einem Fahrzeug, mit zumindest einer klappbaren Trittplatte an der dem Fahrzeug abgewandten Außenseite des Kraftstofftanks, welche Trittplatte im eingeklappten Zustand im wesentlichen bündig mit der Außenseite oder einer allfälligen Verkleidung derselben abschließt.

Derzeit werden Trittplatten für Kraftstofftanks entweder starr an der Außenseite des Kraftstofftanks angeschweißt, oder es wird ein topfartiger Einsatz in die Wandung des Kraftstofftanks eingesetzt, welcher selbst die Trittstufe bildet oder starre Trittstufen enthält, oder es werden in einem vom Tank gesonderten Vorsatzgehäuse Klappstufen angebracht (siehe z.B. DE 10 2004 005 153 A1). Erstere und letztere Varianten haben den Nachteil, daß sie sperrig sind und die Außenabmessungen des Fahrzeugs und damit seinen Luftwiderstand erhöhen, und zweitere Variante hat den Nachteil, daß sie das ausnutzbare Volumen des Kraftstofftanks empfindlich reduziert.

Ein Kraftstofftank der eingangs genannten Art ist aus der DE-A1-100 33 386 bekannt. Bei der bekannten Lösung sind die Trittplatten in zwei vertikalen Seitenholmen gelagert, welche in einer durch einen Absatz des Tanks gebildeten Ausnehmung der Tankaußenseite angeordnet und dort mit Hilfe von den gesamten Tankabsatz umlaufenden Spannriemen verankert sind. Diese Konstruktion ist einerseits aufwendig in der Montage und reduziert anderseits das ausnützbare Tankvolumen, weil der Tank für den Umlauf der Spannbänder über die gesamte Außenseite abgesetzt, d.h. querschnittsreduziert werden muß.

Die Erfindung setzt sich zum Ziel, einen Kraftstofftank mit klappbarer Trittplatte zu schaffen, welcher die genannten Nachteile überwindet. Dieses Ziel wird gemäß der Erfindung dadurch erreicht, daß die zumindest eine Trittplatte in einer Vertiefung der Außenseite des Kraftstofftanks herausklappbar gelagert isL, wobei die Vertiefung durch einen topfartigen Einsatz gebildet ist, welcher in die Wandung des Kraftstofftanks dicht eingelassen ist.

Dies ergibt eine überaus kompakte Integration einer Trittplattenfunktion in einen Kraftstofftank, welche weder die Außenabmessungen und den Luftwiderstand des Fahrzeuges noch das ausnutzbare Volumen des Tankes nennenswert beeinträchtigt.

Ein solcher topfartiger Einsatz ist modular fertigbar und kann mit unterschiedlichen Kraftstofftanks kombiniert werden.

Gemäß einer bevorzugten Ausführungsform lagert die Vertiefung zwei herausklappbare Trittplatten, um optimale Tritthöhe und -bequemlichkeit zu erreichen.

Bevorzugt hat die Vertiefung eine solche Tiefe, daß sie die Dicke der Trittplatten im eingeklappten Zustand gerade aufzunehmen vermag. Dadurch wird die Beeinträchtigung des Innenvolumens des Kraftstofftanks möglichst gering gehalten.

Ein besonders störungsunanfälliger und stabiler Klappmechanismus für die Trittplatten zeichnet sich dadurch aus, daß die Trittplatten mittels seitlich abstehender Lagerzapfen in Kulissenführungen der Vertiefung gleiten und im ausgeklappten Zustand durch an der Vertiefung angelenkte Klappstreben gehalten sind.

Die Erfindung wird nachstehend anhand eines in den beigeschlossenen Zeichnungen dargestellten Ausführungsbeispieles näher erläutert. In den Zeichnungen zeigt:
Fig. 1 den Kraftstofftank der Erfindung in einer Perspektivansicht;
Fig. 2 einen mittigen Vertikalschnitt durch den Einsatz mit den Trittplatten des Kraftstofftankes von Fig. 1; und
   die Fig. 3 und 4 die vollständig ein- bzw. ausgeklappte Stellung der Trittplatten.

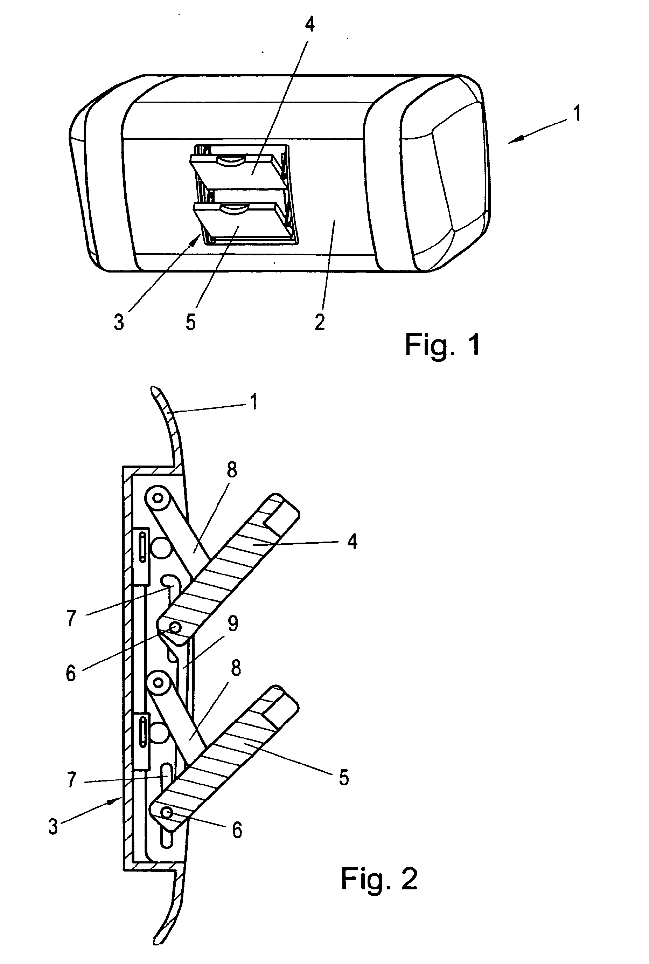

Fig. 1 zeigt einen Kraftstofftank 1 von etwa abgerundetparallelepipedischer Form. In die dem Fahrzeug (nicht gezeigt) abgewandte Außenseite 2 des Kraftstofftanks 1 ist eine Vertiefung 3 eingearbeitet, beispielsweise durch entsprechendes Prägen oder Tiefziehen der Wandung des Kraftstofftanks 1.

In dem gezeigten Beispiel wird die Vertiefung 3 durch einen gesonderten, topfartigen Einsatz gebildet, der in die Wandung des Kraftstofftanks dicht eingelassen ist, siehe Fig. 2.

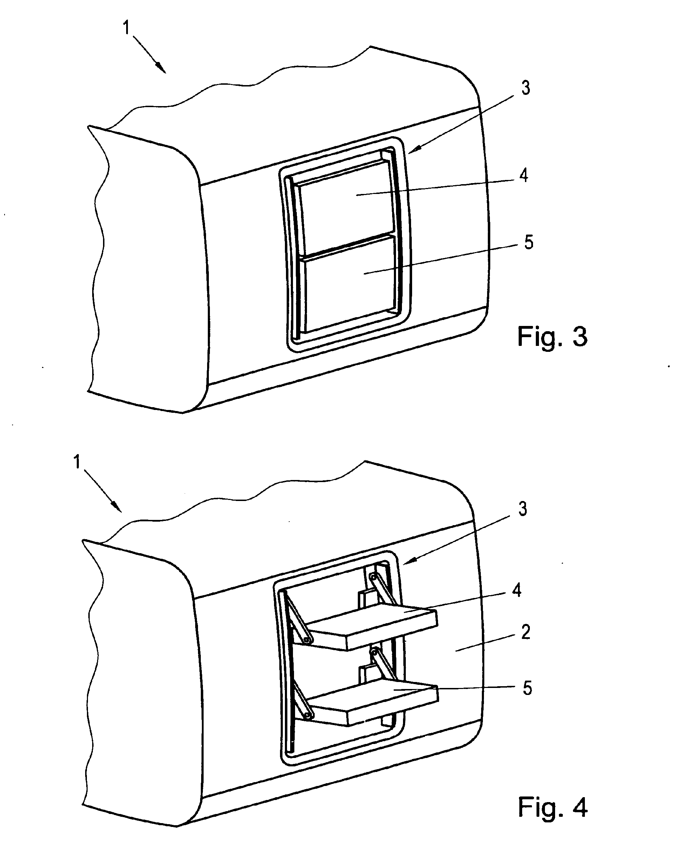

Die Vertiefung 3, hier der Einsatz, lagert zwei herausklappbare Trittplatten 4, 5. Es versteht sich, daß anstelle von zwei auch nur eine oder mehr als zwei Trittplatten vorhanden sein können. Im eingeklappten Zustand schließen die Trittplatten 4, 5 im wesentlichen bündig mit der Außenseite 2 des Kraftstofftanks 1 (siehe Fig. 3) oder mit einer allfälligen auf die Außenseite aufgebrachten Verkleidung (nicht dargestellt) ab; im herausgeklappten Zustand kragen sie etwa waagrecht aus, um als Trittstufen zum Besteigen des Fahrzeuges verwendet werden zu können (Fig. 4).

Die Vertiefung 3 hat eine solche Tiefe, daß sie die Dicke der Trittplatten 4, 5 im eingeklappten Zustand (Fig. 3) gerade aufnimmt, um das Innenvolumen des Kraftstofftanks 1 möglichst wenig zu beeinträchtigen.

Der Klappmechanismus der Trittplatten 4, 5 ist in Fig. 2 im Detail gezeigt. Jede Trittplatte 4, 5 gleitet mittels beidseitig abstehender Lagerzapfen 6 in seitlichen Kulissenführungen 7 des hier als Vertiefung 3 dienenden Einsatzes. Im ausgeklappten Zustand werden die Trittplatten 4, 5 durch am Einsatz angelenkte Klappstreben 8 gehalten. An den Lagerzapfen 6 der beiden Trittplatten 4, 5 angelenkte Verbindungsstangen 9 kuppeln die Trittplatten zu einer gleichläufigen Bewegung.

Die Erfindung ist nicht auf die dargestellten Ausführungsbeispiele beschränkt, sondern umfaßt alle Varianten und Modifikationen, die in den Rahmen der angeschlossenen Ansprüche fallen. So kann beispielsweise anstelle des gezeigten bevorzugten Klappmechanismus auch jede andere in der Technik bekannte Art von Klappmechanismus für die Trittplatten vorgesehen werden.

## Patentansprüche

1. Kraftstofftank (1) zur Außenmontage an einem Fahrzeug, mit zumindest einer klappbaren Trittplatte (4, 5) an der dem Fahrzeug abgewandten Außenseite (2) des Kraftstofftanks, welche Trittplatte (4, 5) im eingeklappten Zustand im wesentlichen bündig mit der Außenseite (2) oder einer allfälligen Verkleidung derselben abschließt, **dadurch gekennzeichnet, daß** die zumindest eine Trittplatte (4, 5) in einer Vertiefung (3) der Außenseite (2) des Kraftstofftanks (1) herausklappbar gelagert ist, wobei die Vertiefung (3) durch einen topfartigen Einsatz gebildet ist, welcher in die Wandung des Kraftstofftanks (1) dicht eingelassen ist.

2. Kraftstofftank nach Anspruch 1, **dadurch gekennzeichnet, daß** die Vertiefung (3) zwei herausklappbare Trittplatten (4, 5) lagert.

3. Kraftstofftank nach Anspruch 1 oder 2, **dadurch gekennzeichnet, daß** die VerLiefung (3) eine solche Tiefe hat, daß sie die Dicke der Trittplatten (4, 5) im eingeklappten Zustand gerade aufzunehmen vermag.

4. Kraftstofftank nach einem der Ansprüche 1 bis 3, **dadurch gekennzeichnet, daß** die Trittplatten (4, 5) mittels seitlich abstehender Lagerzapfen (6) in Kulissenführungen (7) der Vertiefung (3) gleiten und im ausgeklappten Zustand durch an der Vertiefung (3) angelenkte Klappstreben (8) gehalten sind.

## Claims

1. Fuel tank (1) for external mounting on a vehicle, with at least one folding running board (4, 5) on the outer surface (2) of the fuel tank remote from the vehicle, said running board (4, 5), when in folded-in state, terminating substantially flush with the outer surface (2) or any lining present thereof, **characterised in that** the at least one running board (4, 5) is disposed in a recess (3) of the outer surface (2) of the fuel tank (1) so as to be folded out, wherein the recess (3) is formed by a cup-like insert, which is tightly set into the wall of the fuel tank (1).

2. Fuel tank according to claim 1, **characterised in that** the recess (3) houses two folding running boards (4, 5).

3. Fuel tank according to claim 1 or 2, **characterised in that** the depth of the recess (3) is such that it just accommodates the thickness of the running boards (4, 5) when in the folded-in state.

4. Fuel tank according to one of claims 1 to 3, **characterised in that** the running boards (4, 5) slide into slotted link guides (7) of the recess (3) by means of laterally projecting bearing journals (6) and are held in the folded-out state by folding struts (8) articulated to the recess (3).

## Revendications

1. Réservoir de carburant (1) pour le montage extérieur sur un véhicule automobile, comprenant au moins une plaque de marchepied (4, 5) rabattable sur le côté extérieur (2), détournée du véhicule, du réservoir de carburant, la plaque de marchepied (4, 5) se raccordant à l'état replié essentiellement en affleurement avec la face extérieure (2) ou avec un habillage éventuel, **caractérisé en ce que** ladite au moins une plaque de marchepied (4, 5) est montée dans un renfoncement (3) de la face extérieure (2) du réservoir de carburant (1) de façon à pouvoir être dépliée vers l'extérieur, ledit renfoncement (3) étant formé par un insert semblable à un godet, lequel est intégré de façon étanche dans la paroi du réservoir de carburant (1).

2. Réservoir de carburant selon la revendication 1, **caractérisé en ce que** le renfoncement (3) reçoit deux plaques de marchepied (4, 5) capables d'être dépliées vers l'extérieur.

3. Réservoir de carburant selon la revendication 1 ou 2, **caractérisé en ce que** le renfoncement (3) a une profondeur telle qu'il permet de recevoir exactement l'épaisseur des plaques de marchepied (4, 5) dans l'état rabattu.

4. Réservoir de carburant selon l'une des revendications 1 à 3, **caractérisé en ce que** les plaques de marchepied (4, 5) coulissent, au moyen de tenons de montage en déplacement latéral (6), dans des guidages à glissière (7) du renfoncement (3) et sont maintenus à l'état déplié vers l'extérieur au moyen d'entretoises de pivotement (8) articulées dans le renfoncement (3).
